# EUROPEAN PATENT SPECIFICATION

(11) **EP 2 162 320 B1**
(45) Date of publication and mention of the grant of the patent: **24.04.2019**
(21) Application number: 08762288.2
(22) Date of filing: 05.06.2008
(51) Int. Cl.: B60R 25/00

(54) **A VEHICLE HAVING A SECURITY SYSTEM**
EIN FAHRZEUG MIT EINEM SICHERHEITSSYSTEM
VÉHICULE DOTÉ D'UN SYSTÈME DE SÉCURITÉ

(30) Priority: 07.06.2007 GB 0710959
(43) Date of publication of application: 17.03.2010
(73) Proprietor: Spysystems Limited, Epping Essex CM16 4HG (GB)
(72) Inventor: WADE, Darren George, London NW6 5DR (GB)
(74) Representative: Barker Brettell LLP
(86) International application number: PCT/GB2008/001947
(87) International publication number: WO 2008/149105

(56) References cited:
- DE-A1- 10 341 691
- GB-A- 2 408 886
- US-A1- 2007 080 826

## Description

The device known from the granted patent application GB 2 408 886 A differs from the present invention in the ways which are described below.

This document refers to the sending and receiving of video (and still) images and that these can be viewed by a portable viewing unit. Although this is understood to encompass the sending and receiving by means of mobile phones it was not explicitly stated as such. The present invention however would be "GSM-enabled"*, initially using so-called 2^{nd} Generation networks ("2G") but eventually also through 3^{rd} generation networks ("3G") or later networks not yet available. The mobile telephone industry has only just commenced a major evolution from 2G to 3G technology. 3G systems offer increased bandwidth, allowing the use of mobile telephone video services. It is believed that 3G will underpin the future GSM market.

As previously, the product is aimed at the security/surveillance sector. A portable, self powered, Security Unit contains a miniature electronic camera (or cameras) and a GSM* (i.e., portable telephone) transceiver. The user would most probably view the sent data using a mobile telephone as the receiver.

The image information can be sent directly or via an intermediate system. That is, it could be sent either directly to another telephone or to the internet via a GSM/ "Internet Gateway". This extends the coverage of the system from local GSM networks to the globally accessible, Internet network. Thus imagery could be sent worldwide.

(* Global-System for Mobile Communications. GSM is an evolving wireless communications standard that already offers an extensive and feature-rich 'family' of voice and data services. The GSM family of technologies consists of today's GSM, General Packet Radio Service (GPRS), Enhanced Data rates for GSM Evolution (EDGE) and third generation GSM services (3GSM) based on W-CDMA and HSDPA access technologies. Together these technologies underpin the GSM platform. 3GSM is the latest addition to the GSM family. 3GSM enables the provision of mobile multimedia services such as music, TV and video, rich entertainment content and Internet access. The technology on which 3GSM services are delivered is based on a GSM network enhanced with a Wideband-CDMA (W-CDMA) air interface - the over-the-air transmission element. Global operators, in conjunction with the 3G Partnership Project (3GPP) standards organisation, have developed 3GSM as an open standard.)

The closest prior-art document US 2007/080826 A discloses a vehicle having a security system comprising a surveillance unit and viewing means, the surveillance unit comprising, a camera, and transmitter means for transmitting surveillance data from the camera to the viewing means, the surveillance unit being attached to the vehicle by releasable attachment means, the surveillance unit being portable when not attached to the vehicle, and the releasable attachment means being such that it has a locking device for helping to prevent the video surveillance unit from being stolen from the vehicle.

### Description of the new device

The central theme of the second patent application is that it is a portable device and it can be attached and detached quickly and easily to and from various points on the chassis or body or inside of vehicles or underneath vehicles (commercial or otherwise). This portability means that it would not in fact be limited to use with vehicles but could be located in any place where security is an issue. This however would, we feel not mean that the device infringes patents for existing security systems because such systems are fixed to the buildings (or other items) that they are protecting. This system for instance could simply be left on a table in an office or in the back of a commercial vehicle or inside a yacht etc.

The "main" function, however is to be used with vehicles.

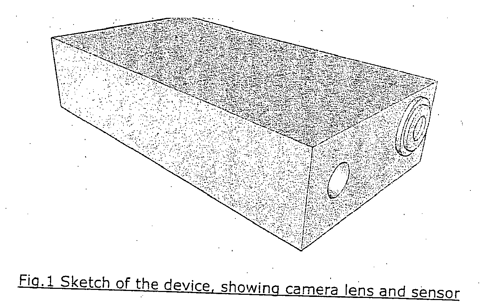

In the "detection mode", the camera is activated by a local intruder detection system (e.g., IR movement sensors, etc). Fig.1 is a sketch of a the device showing camera lens and sensor.

Once the detector has been triggered, the camera commences taking either a picture, series of pictures or video stream. The picture information is given a 'time stamp' and stored locally, whilst also being transmitted via the GSM network to GSM receiving apparatus, where the images may be viewed and stored.

The system may also be able to record data locally for later uploading.

As stated above, the main novelty is that the new invention will be fully portable. The device described in the previous patent had a portable hand-held display unit, but the camera and senor assembly sending the signals was not specified as being portable but was installed to a vehicle and this would have been done at the manufacturing stage or as an after-sales item.

The present invention however has a means whereby it can be quickly and easily attached and released. Moreover, this will be lockable.

This could be achieved in a number of ways using various means of attachment. The preferred method would feature a fixing plate that will be semi-permanently attached to the vehicle and a quick-release attachment means that will be part of the enclosure design (the outer casing of the device). There will also feature a locking mechanism. A male-female securing means is envisioned where the male part is on the fixing plate and the female part is on the "enclosure" or casing (but this could of course be reversed). This could be achieved in other ways such as using suction pads, 'hook and loop' fixings (Velcro™), magnets a screw-down clamp, or various other means. The key thing is that it is very easily released and attached and also locked to prevent theft or accidental removal.

The user would install the fixing plate to, for instance, the inside of a commercial vehicle. The plate could be fixed to the inside wall of the vehicle using perhaps screws (not shown). This is thus a semi-permanent fixing arrangement.

The user would then place the device onto the fixing plate and by some means the case would be held in place and would be secured and locked. The locking function could be achieved using a key or using a secret code or a combination-type mechanical lock or using an electronically sent locking instruction or by any other kind of locking mechanism.

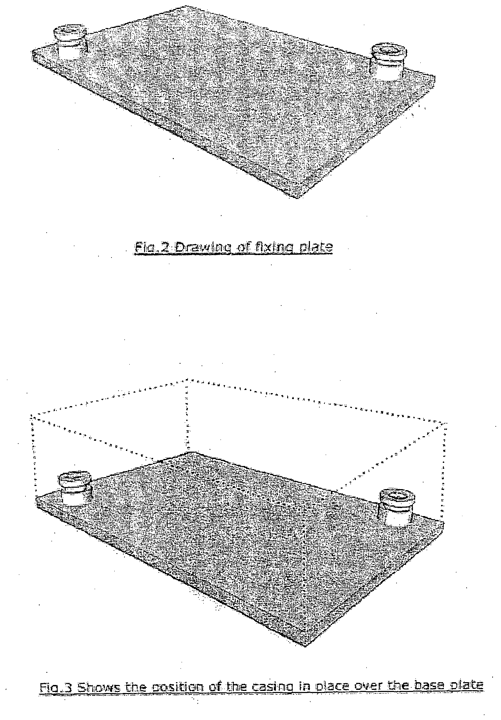

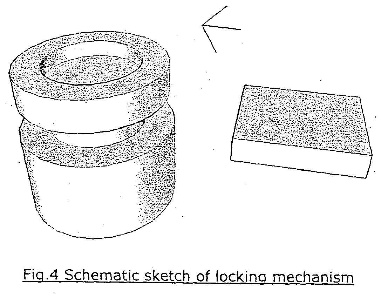

Fig. 2 shows a schematic of the fixing plate. As can be see two 'male' flanged spigots extend from the surface of the base plate to engage with the 'female' recesses on the casing (not shown). The casing has means for connecting with the channels In the male spigots thus preventing disengagement. In this way the base plate and casing are secured and locked together (Fig. 3 & Fig. 4).

The Male spigot is shown again in Fig. 4: a locking bar moves across (direction of the arrow) to engage the channel in the spigot and thus prevents removal. Having two spigots and locks prevents rotation and adds to the overall security. In Fig. 4 the bar has a blunt edge. If a sloping or chamfered edge were used the bar could be pushed aside by the action of the spigot entering the recess in the casing. In this case the bar would be spring-loaded and would automatically slide across to prevent the spigot from being removed. The possible disadvantage with that is that it may be locked inadvertently, before the user has intended (as with a 'Yale' door lock). The bar could be moved across by a solenoid or by a rack and pinion or by any other device or combination of devices.

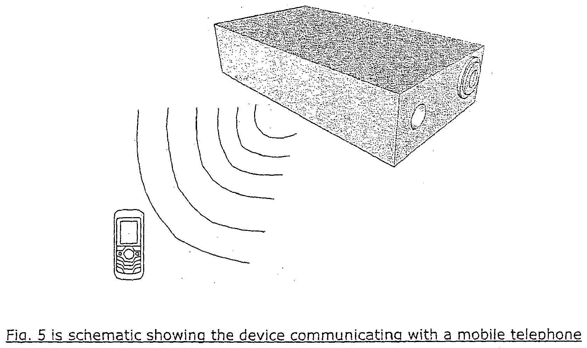

Fig. 5 is a schematic showing the device sending data to a mobile phone.

The locking and unlocking action may be used to automatically deactivate and activate the device.

The system will have a rechargeable battery (not shown). This will be recharged using mains supply, car cigarette lighter or via renewable resources such as solar power or wind power. There may be some power management strategy such as the sensor only being on every six seconds.

The enclosure may be water resistant or could be waterproof. The option of an automatic screen guard may be necessary to allow the device to be located underneath commercial vehicle chassis to warn the driver of an approach by illegal immigrants. Thus, just prior to capturing images a screen or guard would move away from the screen and then after the image capture would move back across the screen again.

The device will give an audible alarm which will provide a deterrent to intruders, letting them know that their presence has been noted.

If the device is removed without being disabled properly then an alarm should be sounded. This should include perhaps a warning text message to be sent to the owner.

The device may be able to use infra-red light so that it will work in the dark.

The user will be able to set a chosen mobile phone number to send the data to; the user will be able to disable the system either using a separate key-fob type of device perhaps but most likely through sending a text message (to avoid extra devices being necessary); the user will be able to send a text message to request a text status update (e.g., is the device on? Is a signal available? Is battery low?); the user will be able to request a photo to check security.

## Claims

1. A security system for a vehicle, comprising a portable surveillance unit and portable viewing means, the surveillance unit comprising a camera and wireless transmitter means for transmitting surveillance data from the camera to the portable viewing means, the surveillance unit being attachable to the vehicle by releasable attachment means, the surveillance unit being portable when not attached to the vehicle, the surveillance unit being battery operated and such that it contains at least one battery, and the releasable attachment means being such that it has a locking device for helping to prevent the surveillance unit from being stolen from the vehicle.

2. A security system as claimed in claim 1, wherein the locking device is a spigot and bar locking device.

3. A security system as claimed in claim 1, wherein the locking device is a flange and lever locking device.

4. A security system as claimed in claim 1, 2 or 3, wherein the releasable attachment means comprises a first portion forming part of the surveillance unit, and a second portion forming part of the vehicle.

5. A security system as claimed in claim 1, 2 or 3, wherein said portable surveillance unit comprises a casing and said releasable attachment means comprises a fixing plate which can be semi-permanently installed to the vehicle and quick-release attachment means that is a part of the casing.

6. A security system as claimed in any one of the preceding claims, wherein said portable surveillance unit comprises an intruder detection system configured to activate the camera on detecting an intruder.

7. A security system as claimed in any one of the preceding claims, including alarm means for causing an alarm if the video surveillance unit is removed from the vehicle in an unauthorised manner.

8. A security system as claimed in claim 7, wherein the alarm means transmits the alarm to the portable viewing means.

9. A security system as claimed in claim 7 or 8, wherein the alarm means comprises a proximity switch.

10. A security system as claimed in claim 7 or 8, wherein the alarm means comprises a micro switch.

11. A security system as claimed in any one of claims 7 to 10, further comprising test means for testing the alarm means.

12. A security system as claimed in any one of the preceding claims, wherein the camera is a video camera.

13. A security system as claimed in any one of claims 1 to 11, wherein the camera is a camera providing still images.

14. A security system as claimed in any one of the preceding claims, wherein the portable viewing means is a mobile camera.

15. A vehicle having the security system of any preceding claim.

16. A vehicle in accordance with claim 15, wherein the vehicle is a road vehicle, ship or an aircraft.

## Patentansprüche

1. Sicherheitssystem für ein Fahrzeug, umfassend eine tragbare Überwachungseinheit und eine tragbare Betrachtungseinrichtung, wobei die Überwachungseinheit eine Kamera und eine drahtlose Sendeeinrichtung zum Senden von Überwachungsdaten von der Kamera an die tragbare Betrachtungseinrichtung umfasst, wobei die Überwachungseinheit durch eine lösbare Befestigungseinrichtung an dem Fahrzeug befestigbar ist, wobei die Überwachungseinheit tragbar ist, wenn sie nicht an dem Fahrzeug befestigt ist, wobei die Überwachungseinheit batteriebetrieben und derart beschaffen ist, dass sie mindestens eine Batterie umfasst, und wobei die lösbare Befestigungseinrichtung derart beschaffen ist, dass sie eine Verriegelungsvorrichtung aufweist, um dabei zu helfen zu verhindern, dass die Überwachungseinheit aus dem Fahrzeug gestohlen wird.

2. Sicherheitssystem nach Anspruch 1, wobei die Verriegelungsvorrichtung eine Zapfen- und Stangen-Verriegelungsvorrichtung ist.

3. Sicherheitssystem nach Anspruch 1, wobei die Verriegelungsvorrichtung eine Flansch- und Hebel-Verriegelungsvorrichtung ist.

4. Sicherheitssystem nach Anspruch 1, 2 oder 3, wobei die lösbare Befestigungseinrichtung einen ersten Abschnitt, der Teil der Überwachungseinheit bildet, und einen zweiten Abschnitt, der Teil des Fahrzeugs bildet, umfasst.

5. Sicherheitssystem nach Anspruch 1, 2 oder 3, wobei die tragbare Überwachungseinheit ein Gehäuse umfasst und die lösbare Befestigungseinrichtung eine Befestigungsplatte, die semi-permanent an dem Fahrzeug installiert werden kann, und eine Schnelllösebefestigungseinrichtung, die ein Teil des Gehäuses ist, umfasst.

6. Sicherheitssystem nach einem der vorhergehenden Ansprüche, wobei die tragbare Überwachungseinheit ein Eindringlingserfassungssystem umfasst, das dazu ausgelegt ist, die Kamera beim Erfassen eines Eindringlings zu aktivieren.

7. Sicherheitssystem nach einem der vorhergehenden Ansprüche, umfassend eine Alarmeinrichtung zum Auslösen eines Alarms, wenn die Videoüberwachungseinheit unbefugt aus dem Fahrzeug entfernt wird.

8. Sicherheitssystem nach Anspruch 7, wobei die Alarmeinrichtung den Alarm an die tragbare Betrachtungseinrichtung sendet.

9. Sicherheitssystem nach Anspruch 7 oder 8, wobei die Alarmeinrichtung einen Annäherungsschalter umfasst.

10. Sicherheitssystem nach Anspruch 7 oder 8, wobei die Alarmeinrichtung einen Mikroschalter umfasst.

11. Sicherheitssystem nach einem der Ansprüche 7 bis 10, ferner umfassend eine Testeinrichtung zum Testen der Alarmeinrichtung.

12. Sicherheitssystem nach einem der vorhergehenden Ansprüche, wobei die Kamera eine Videokamera ist.

13. Sicherheitssystem nach einem der Ansprüche 1 bis 11, wobei die Kamera eine Kamera ist, die Standbilder liefert.

14. Sicherheitssystem nach einem der vorhergehenden Ansprüche, wobei die tragbare Betrachtungseinrichtung eine mobile Kamera ist.

15. Fahrzeug mit dem Sicherheitssystem nach einem der vorhergehenden Ansprüche.

16. Fahrzeug nach Anspruch 15, wobei das Fahrzeug ein Straßenfahrzeug, ein Schiff oder ein Luftfahrzeug ist.

## Revendications

1. Système de sécurité pour un véhicule, comprenant une unité de surveillance portable et un moyen de visualisation portable, l'unité de surveillance comprenant une caméra et un moyen de transmetteur sans fil pour transmettre des données de surveillance de la caméra au moyen de visualisation portable, l'unité de surveillance étant apte à être attachée au véhicule par un moyen de fixation amovible, l'unité de surveillance étant portable lorsqu'elle n'est pas attachée au véhicule, l'unité de surveillance étant alimentée par batterie et telle qu'elle contient au moins une batterie, et le moyen de fixation amovible étant tel sorte qu'il a un dispositif de verrouillage pour aider à empêcher l'unité de surveillance d'être volée du véhicule.

2. Système de sécurité selon la revendication 1, dans lequel le dispositif de verrouillage est un dispositif de verrouillage à ergot et à barre.

3. Système de sécurité selon la revendication 1, dans lequel le dispositif de verrouillage est un dispositif de verrouillage à bride et à levier.

4. Système de sécurité selon la revendication 1, 2 ou 3, dans lequel le moyen de fixation amovible comprend une première partie faisant partie de l'unité de surveillance, et une seconde partie faisant partie du véhicule.

5. Système de sécurité selon la revendication 1, 2 ou 3, dans lequel ladite unité de surveillance portable comprend un boîtier et ledit moyen de fixation amovible comprend une plaque de fixation qui peut être installée de manière semi-permanente dans le véhicule et un moyen de fixation rapide qui est une partie du boîtier.

6. Système de sécurité selon l'une quelconque des revendications précédentes, dans lequel ladite unité de surveillance portable comprend un système de détection d'intrus configuré pour activer la caméra lors de la détection d'un intrus.

7. Système de sécurité selon l'une quelconque des revendications précédentes, comprenant un moyen d'alarme pour déclencher une alarme si l'unité de surveillance vidéo est retirée du véhicule sans autorisation.

8. Système de sécurité selon la revendication 7, dans lequel le moyen d'alarme transmet l'alarme au moyen de visualisation portable.

9. Système de sécurité selon la revendication 7 ou 8, dans lequel le moyen d'alarme comprend un commutateur de proximité.

10. Système de sécurité selon la revendication 7 ou 8, dans lequel le moyen d'alarme comprend un micro-commutateur.

11. Système de sécurité selon l'une quelconque des revendications 7 à 10, comprenant en outre un moyen de test pour tester le moyen d'alarme.

12. Système de sécurité selon l'une quelconque des revendications précédentes, dans lequel la caméra est une caméra vidéo.

13. Système de sécurité selon l'une quelconque des revendications 1 à 11, dans lequel la caméra est une caméra fournissant des images fixes.

14. Système de sécurité selon l'une quelconque des revendications précédentes, dans lequel le moyen de visualisation portable est une caméra mobile.

15. Véhicule ayant le système de sécurité selon l'une quelconque des revendications précédentes.

16. Véhicule selon la revendication 15, dans lequel le véhicule est un véhicule terrestre, un navire ou un aéronef.
